# EUROPÄISCHE PATENTANMELDUNG

(11) **EP 1 152 224 A2**
(43) Veröffentlichungstag der Anmeldung: **07.11.2001**
(21) Anmeldenummer: 01104256.1
(22) Anmeldetag: 22.02.2001
(51) Int. Cl.: G01D 7/00

(54) **Positioniereinheit mit Anzeigevorrichtung**

(30) Priorität: 28.02.2000 DE 10009429
(71) Anmelder: Walcher Messtechnik GmbH, 79199 Kirchzarten (DE)
(72) Erfinder: Kaiser, Michael, 79271 St. Peter (DE); Rathgeber, Peter, 72280 Dornstetten (DE); Wolf, Norbert, 79271 St. Pter (DE)
(74) Vertreter: Walcher, Armin, Dipl.-Ing. Dr.

(57) **Zusammenfassung**

Die Erfindung betrifft eine Positioniereinheit zur automatischen Positionierung einer Welle (1), die zur Einstellung der Position der Welle (1) eine Stellvorrichtung (9) und zur Erfassung und Regelung der Position der Welle (1) ein elektrisches Meßsystem (4) aufweist, wobei die Positioniereinheit zusätzlich eine mechanische Einrichtung zur Erfassung und Anzeige der Position der Welle (1) aufweist und wobei das elektrische Meßsystem (4) und die mechanische Einrichtung im Hinblick auf die Erfassung der Position der Welle (1) aufeinander abgleichbar sind.

## Beschreibung

Die Erfindung betrifft eine Positioniereinheit zur automatischen Positionierung einer Welle, die zur Ein- bzw. Verstellung der Position der Welle eine Stellvorrichtung und zur Erfassung und Regelung der Position der Welle ein elektrisches Meßsystem aufweist.

Eine derartige Positioniereinheit ist eine Vorrichtung zu Positionierung einer Welle, die bei der Positionierung von sogenannten Einstellachsen von Maschinen, die auch als Maschinenachsen bezeichnet werden, verwendet werden. Diese Einstell- oder Maschinenachsen sind Verstell- oder Zustellachsen, mit denen beispielsweise Werkzeuge in eine Arbeitsposition verfahren werden können. Dabei wird ein Maschinenschlitten, auf dem beispielsweise ein Werkzeug angeordnet ist, einer Maschine über eine Gewindespindel bewegt.

Die Positioniereinheit weist eine Welle auf, die als Hohlwelle oder Vollwelle ausgebildet sein kann, und mit der einzustellenden Maschinenachse form- und/oder kraftschlüssig verbunden wird.

Insbesondere finden Positioniereinheiten, d.h. Vorrichtungen zur Positionierung einer Welle, Verwendung bei Be- und Verarbeitungsmaschinen, bei denen vor der Be- bzw. Verarbeitung von Materialien dafür erforderliche Werkzeuge wie z.B. Säge-, Bohr- oder Schleifeinrichtungen aber auch Einrichtungen zum Auftragen von Leim, Furnier, Oberflächenbeschichtungen, etc. in Abhängigkeit von den Abmessungen des herzustellenden oder zu bearbeitenden Gegenstandes in definierte Positionen gefahren werden müssen. Diese Be- bzw. Verarbeitungsmaschinen finden in der verarbeitenden Industrie beispielsweise bei Holzbearbeitungs- bzw. Holzverarbeitungsmaschinen starke Verwendung.

Beispielsweise müssen bei der Herstellung von Möbeln eine Vielzahl von Möbelteilen, die jeweils verschiedene Abmessungen aufweisen, gefertigt werden. Die verschiedenen Möbelteile werden dabei regelmäßig auf einer Holzbearbeitungsmaschine zugeschnitten, gefräst, geschliffen, mit Bohrungen versehen, etc.. Das heißt, für die Fertigung von jedem Möbelteil muß die Holzbearbeitungsmaschine auf verschiedene Maße eingestellt werden.

Die Einstellung der Holzbearbeitungsmaschinen auf die jeweils gewünschten Maße erfolgt über die obenerwähnten Einstellachsen bislang überwiegend von Hand.

Aus der DE 197 03 525.6 ist eine Positioniereinheit zur automatischen Positionierung einer Welle über den gesamten Drehwinkelbereich der Welle bekannt. Die aus der DE 197 03 525.5 bekannte Positioniereinheit erlaubt eine hochpräzise Positionierung einer Welle über den gesamten Drehwinkelbereich der Welle. Das in der vorgenannten Positioniereinheit integrierte Meßsystem kann sowohl inkremental als auch absolut sein.

Der Meßbereich dieser Meßsysteme umfaßt in der Regel einen Winkelbereich von mehreren Umdrehungen der Welle, beispielsweise von hundert 360°-Umdrehungen der Welle.

Nachteilig bei dieser bekannten Positioniereinheit ist, daß bei einer Betriebsunterbrechung, die beispielsweise auf einen Schaden in der Positioniereinheit zurückzuführen ist, die Information über die genaue Position der Welle verloren gehen bzw. aufgrund eines Schadens in der Datenübertragungseinheit nicht mehr ausgelesen werden kann.

Bei einer absoluten Messung ist innerhalb des Meßbereichs jeder Position der Welle ein eindeutiger Zahlenwert zugeordnet. Bei einem Schaden an der Positioniereinheit, der einen Austausch der schadhaften Positioniereinheit gegen eine funktionsfähige erfordert, ist der die genaue Position der Welle angebende Positionswert nicht mehr bekannt.

In diesem Fall muß die Maschinenachse vor dem Austausch der schadhaften Positioniereinheit gegen eine funktionsfähige in eine eindeutig definierte und bekannte Referenzposition gefahren werden, damit das elektrische Meßsystem der funktionsfähigen Positioniereinheit auf den dieser Referenzposition zugeordneten Referenzwert eingestellt werden kann. Üblicherweise wird als Referenzposition eine Position gewählt, bei der sich die Maschinenachse in einer Endlage befindet. Auf diesen der Endlage zugeordneten Referenzwert, beispielsweise Null, muß dann die Positioniereinheit und damit deren internes Meßsystem eingestellt werden. Die Einstellung kann nur elektrisch über eine Datenschnittstelle, z.B. eine CAN-Bus-Schnittstelle, erfolgen.

Wird eine inkrementales Meßverfahren mit Abspeicherung des Meßwerts in einem nichtflüchtigen Speicher verwendet, dann ergibt sich zusätzlich ein Problem, wenn die Maschine im stromlosen Zustand verstellt wurde. Dann weicht der in dem elektrischen Meßsystem der Positioniereinheit abgespeicherte Positionswert der Welle von der tatsächlichen Position der Welle ab. Insofern ist auch hier eine erneute Justierung des elektrischen Meßsystems erforderlich, bei dem die Maschinenachse in eine Referenzposition gefahren werden muß und die Positioniereinheit auf den dieser Referenzposition zugeordneten Referenzwert eingestellt werden muß.

Nachteilig bei der bekannten Positioniereinheit ist, daß bei einem Verlust der Information über die genaue Position der Welle ein aufwendiges Einstellungsverfahren, wie vorstehend beschrieben, durchgeführt werden muß.

Weiterhin kann bei einem Ausfall der Positioniereinheit auch die die Maschinenachse verstellende Stellvorrichtung betroffen sein, so daß die Maschinenachse vor dem Einbau einer funktionsfähigen Positioniereinheit von Hand in eine entsprechende Referenzposition gefahren werden muß. Dies ist aufwendig und erfordert in der Regel zusätzliche Mittel, die ein Verstellen der Maschinenachse von Hand erlauben.

Noch nachteiliger ist die Situation, wenn die Positioniereinheit während des Betriebes der Be- bzw. Verarbeitungsmaschine ausfällt. In einem solchen Fall kann das Fahren der Maschinenachse in eine Referenzposition unmöglich sein, da sich noch ein Werkzeug, beispielsweise eine Kreissäge, im Eingriff mit dem bearbeiteten Gegenstand befindet. Ein Fahren der Maschinenachse in die Referenzposition würde dann zu einer Beschädigung des Werkzeugs und/oder des bearbeiteten Gegenstandes führen.

In einem solchen Fall sind daher umfängliche Reparaturmaßnahmen erforderlich, bei denen die Be- bzw. Verarbeitungsmaschine soweit zerlegt werden muß, daß ein Entnehmen des sich im Eingriff befindlichen Werkzeugs bzw. des bearbeiteten Gegenstandes möglich ist, so daß die Maschinenachse nachfolgend in die Referenzposition gefahren werden kann. Anschließend kann dann die schadhafte Positioniereinheit gegen eine funktionsfähige Positioniereinheit ausgetauscht werden.

Grundsätzlich ist eine Ausgabe der genauen Position aus einem internen absoluten Meßsystem bzw. bei einem inkrementalen Meßsystem aus einem elektronischen Speicher, beispielsweise einem nichtflüchtigen Speicher, der schadhaften Positioniereinheit denkbar. Sofern jedoch das elektrische Auslesen der genauen Position aufgrund des Schadens, beispielsweise bei einem Ausfall des Datenbus oder des Meßsystems, nicht mehr möglich ist, muß die Maschinenachse vor dem Einbau der funktionsfähigen Positioniereinheit zunächst in eine Referenzposition gefahren werden. Dies ist jedoch, wie vorstehend dargelegt, sehr aufwendig.

Aufgabe der vorliegenden Erfindung ist es mithin, eine Positioniereinheit bereitzustellen, die nicht die oben aufgeführten Nachteile aufweist. Aufgabe ist es somit insbesondere, eine Positioniereinheit bereitzustellen, die einen einfachen und zuverlässigen Austausch einer Positioniereinheit in jeder Position einer Maschinenachse ermöglicht.

Die der Erfindung zugrundeliegende Aufgabe wird durch Bereitstellung einer Positioniereinheit gemäß Patentanspruch 1 gelöst. Bevorzugte Weiterbildungen sind in den abhängigen Ansprüchen 2 bis 19 angegeben.

Bei der vorliegenden Erfindung kann eine Positioniereinheit zur automatischen Positionierung einer Welle verwendet werden, die zur Einstellung der Position der Welle eine Stellvorrichtung und zur Erfassung und Regelung der Position der Welle ein elektrisches bzw. elektronisches Meßsystem aufweist, wobei die Positioniereinheit zusätzlich eine mechanische Einrichtung zur Erfassung und Anzeige der Position der Welle aufweist und wobei das elektrische Meßsystem und die mechanische Einrichtung im Hinblick auf die Erfassung der Position der Welle aufeinander abgleichbar sind.

Die Stellvorrichtung kann einen Stellantrieb wie beispielsweise ein Elektromotor, insbesondere ein Schrittmotor, umfassen, der mit der Welle auf herkömmliche Art und Weise beispielsweise über Riemen, Zahnriemen, Reibscheiben, Kupplung, Flansch, ein oder mehrere Getriebe bzw. ein oder mehrere Getriebegruppen verbunden ist.

Als elektrisches Meßsystem kann beispielsweise das aus der DE 197 03 525.6 bekannte Meßsystem verwendet werden. Dieses Meßsystem erlaubt zum einen die Erfassung als auch die Regelung der Position der Welle. Dabei wird in die Positioniereinheit ein Positionswert der Welle als Sollwert eingegebenen, wonach die Stellvorrichtung eine Verstellung der Welle bzw. Einstellung der Welle in die gewünschte Position bewirkt.

Innerhalb des Meßbereichs ist beispielsweise jeder Position der Welle ein eindeutiger Zahlenwert zugeordnet. Die Position der Welle kann dabei über die Anzahl der vollständigen bzw. teilweisen Umdrehungen der Welle definiert sein. Der zugeordnete Zahlenwert kann beispielsweise auf der Anzahl der vollständigen und/oder teilweisen Umdrehungen der Welle und der Steigung eines an der Welle vorhandenen Gewindes, über das die Verstellung der zugehörigen Maschinenachse bewirkt wird, basieren. Selbstverständlich sind auch andere Zuordnungsmöglichkeiten von Zahlenwerten zu der Position der Welle möglich, beispielsweise bei einer Verstellung der Maschinenachse über einen Zahnstangen-Ritzel-Kombination. Das Meßsystem kann dabei ein absolutes Meßsystem oder auch ein inkrementales Meßsystem sein. Das in der Positioniereinheit integrierte Meßsystem ist dabei vorzugsweise ein absolutes Meßsystem.

Die erfindungsgemäße Positioniereinheit weist ferner Mittel zur Befestigung der Positioniereinheit an einer zu positionierenden Maschinenachse auf. Diese Mittel können dabei unterschiedlich ausgestaltet sein. Beispielsweise kann die erfindungsgemäße Positioniereinheit eine Welle in Form einer Hohlwelle aufweisen, die auf eine Maschinenachse aufschiebbar ist. Beispielsweise über einen an der Hohlwelle angeordneten Klemmring kann dann die Hohlwelle mit der Maschinenachse kraftschlüssig verbunden werden. Selbstverständlich kann die als Hohlwelle ausgebildete Welle auch über andere Mittel form- und/oder kraftschlüssig mit der Maschinenachse verbunden werden.

Bei Ausbildung der Welle als Vollwelle bzw. massive Welle kann die erfindungsgemäße Positioniereinheit über eine Kupplung, Flansch, etc. mit der Maschinenachse verbunden werden.

Über die Maschinenachse werden dann die zu verstellenden Einrichtungen an der Be- bzw. Verarbeitungsmaschine wie beispielsweise Bohrer, Säge, Hobel, Fräse, Schleifvorrichtung, Abstandshalter, Vorrichtungen zur Aufbringung von Leim, Furnier oder Lack, etc., ver- bzw. eingestellt.

Bei der erfindungsgemäßen Positioniereinheit zur automatischen Positionierung einer Welle ist zusätzlich eine mechanische Einrichtung vorgesehen, die die Position der Welle erfaßt und anzeigt. Wesentlich ist, daß die mechanische Einrichtung und das elektrische Meßsystem aufeinander abgleichbar bzw. abgeglichen sind, so daß die von dem elektrischen Meßsystem erfaßte Position der Welle und die von der mechanischen Einrichtung erfaßte Position der Welle in einem eindeutigen Zuordnungsverhältnis zueinander stehen. Idealerweise ist der von dem elektrischen Meßsystem erfaßte und der von der mechanischen Einrichtung erfaßte und ausgegebene Positionswert identisch.

Bei einem Schaden bzw. Ausfall einer in einer Be- bzw. Verarbeitungsmaschine angeordneten Positioniereinheit kann somit unabhängig von der Art des Schadens an der Positioniereinheit die exakte Position der Welle an der mechanischen Einrichtung abgelesen werden.

Die gegen eine schadhafte Positioniereinheit auszutauschende funktionsfähige Positioniereinheit kann manuell oder über die in der Positioniereinheit befindlichen elektrischen Stellvorrichtung auf den entsprechenden Positionswert genau eingestellt werden. Die mechanische Anzeige zeigt dann natürlich den entsprechenden Positionswert an. Weiterhin wird dieser Positionswert durch das elektrische Meßsystem gemessen.

Die schadhafte Positioniereinheit wird dann gegen die auf den gleichen Positionswert eingestellte funktionsfähige Positioniereinheit ausgetauscht. Somit kann die Be- bzw. Verarbeitungsmaschine unmittelbar nach dem Austausch der schadhaften Positioniereinheit gegen eine funktionsfähige Positioniereinheit weiter betrieben werden.

Dies ist insbesondere dann vorteilhaft, wenn die Be- bzw. Verarbeitungsmaschine sich während des auftretenden Schadens in einem Bearbeitungszustand befand, bei dem ein Werkstück bzw. Gegenstand bearbeitet wurde. Dieser Gegenstand kann somit ohne Entnahme aus der Bearbeitungsmaschine weiter verarbeitet werden, da die bislang erforderliche Einstellung, d.h. das Fahren der Maschinenachse in eine Referenzposition entfällt.

Die Ausfallzeit der Be- bzw. Verarbeitungsmaschine wird dadurch deutlich verringert. Insofern ermöglicht die vorliegende Erfindung eine beträchtliche Kostenreduzierung bzw. Produktivitätssteigerung, die auf die verkürzte Ausfallzeit der Maschine zurückzuführen ist.

Weiterhin kann der Austausch einer schadhaften Positioniereinheit gegen eine funktionsfähige Positioniereinheit von jedem Wartungspersonal vorgenommen werden. Der bislang aufwendige Austausch einer schadhaften Positioniereinheit gegen eine funktionsfähige Positioniereinheit, der von speziell geschultem Personal durchgeführt werden mußte, da gegebenenfalls die Be- bzw. Verarbeitungsmaschine teilweise zerlegt und die Maschinenachse in die Referenzposition gefahren werden mußte, entfällt nunmehr.

Gemäß einer vorteilhaften Weiterbildung ist die mechanische Einrichtung zur Anzeige der Position in der Positioniereinheit integriert angeordnet.

Bei den Be- bzw. Verarbeitungsmaschinen sind häufig eine Vielzahl von Positioniereinheiten zur automatischen Positionierung einer Maschinenachse in unmittelbarer Nachbarschaft zueinander angeordnet, so daß die Positioniereinheiten kompakt konstruiert sein müssen. Insofern ist es bevorzugt, daß die mechanische Einrichtung in der Positioniereinheit integriert angeordnet ist.

Ungeachtet dessen wird eine Miniaturisierung dieser Positioniereinheiten auch von den Herstellern der Be- bzw. Verarbeitungsmaschinen gewünscht, um die Verarbeitungsmaschinen insgesamt kompakter gestalten zu können.

Es ist bevorzugt, daß das elektrische Meßsystem und die mechanische Einrichtung zur Erfassung der Position der Welle mit der Stellvorrichtung über ein oder mehrere Übertragungsmittel mechanisch gekoppelt sind.

Bei einer mechanischen Kopplung des elektrischen Meßsystems als auch der mechanischen Einrichtung mit der Stellvorrichtung wird jede Änderung der Position der Welle bzw. jede Verstellung der Welle unmittelbar an der Welle abgegriffen und auf das elektrische Meßsystem bzw. die mechanische Einrichtung übertragen.

Insbesondere ist es bevorzugt, daß zwischen Stellantrieb, wie beispielsweise einem Elektromotor, insbesondere einem Schrittmotor, und der Welle ein Getriebe angeordnet ist. Dieses Getriebe überträgt die von dem Motor ausgeübte Drehbewegung auf die Welle. Mit diesem Getriebe können weitere Übertragungsmittel im Eingriff stehen, wobei die Positionsänderung der Welle zum einen auf das elektrische Meßsystem und zum anderen auf die mechanische Einrichtung übertragen wird. Als Übertragungsmittel können beispielsweise Zahnriemen, Reibscheiben, Getriebe, Schneckengetriebe, Kupplungen, etc. verwendet werden.

Bevorzugt ist, daß das elektrische Meßsystem und die mechanische Einrichtung zur Erfassung der Position der Welle mit der Welle über ein oder mehrere Übertragungsmittel mechanisch gekoppelt sind.

Das heißt, bevorzugt ist an der Welle ein Zahnrad angeordnet, mit dem die Übertragungsmittel im Eingriff stehen. Da die Übertragungsmittel, bevorzugt Getriebe, unmittelbar mit der Welle im Eingriff stehen, wird die tatsächliche Position der Welle genau angezeigt. Selbstverständlich kann die Welle auch mit einem Gewinde versehen sein, mit dem die Übertragungsmittel im Eingriff stehen.

Bei der erfindungsgemäßen Positioniereinheit wird äußerst vorteilhaft auch eine Änderung der Position der Welle, die auf ein Verstellen der Maschinenachse im stromlosen Zustand zurückzuführen ist, zuverlässig erfaßt und angezeigt.

Bevorzugt ist es, daß das Übertragungsmittel ein Getriebe ist. Dabei kann für das elektrische Meßsystem und die mechanische Einrichtung jeweils ein nach Art eines Zwischengetriebes ausgebildetes Getriebe vorgesehen sein. Natürlich ist es auch möglich, daß nur eines dieser Zwischengetriebe vorgesehen ist, über das zugleich die Positionsänderung an das elektrische Meßsystem und an die mechanische Einrichtung übertragen wird. Aus konstruktiven Gründen kann es jedoch bevorzugt sein, daß die Positionsänderung der Welle jeweils durch ein separates Zwischengetriebe an das elektrische Meßsystem bzw. an die mechanische Einrichtung übertragen wird.

Die mechanische Kopplung des elektrischen Meßsystems und der mechanischen Einrichtung mit der Stellvorrichtung erlaubt vor dem Austausch einer an einer Be- bzw. Verarbeitungsmaschine angeordneten schadhaften Positioniereinheit das Ablesen der exakten Position der Welle an der Anzeige der mechanischen Einrichtung. Die funktionsfähige Positioniereinheit wird dann elektrisch über die Stellvorrichtung oder von Hand auf den Positionswert der schadhaften Positioniereinheit eingestellt. Bedingt durch die Kopplung der mechanischen Einrichtung und des elektrischen Meßsystems mit der Stellvorrichtung bzw. bevorzugt mit der Welle der Positioniereinheit wird das elektrische Meßsystem automatisch auf den richtigen Positionswert eingestellt. Insofern kann nach einem Austausch einer schadhaften gegen eine funktionsfähige Positioniereinheit die Be- bzw. Verarbeitungsmaschine sofort den Be- bzw. Verarbeitungsprozess wieder aufnehmen.

Bei der Fertigung des elektrischen Meßsystems können Montagetoleranzen bei den verwendeten Bauteilen, insbesondere des Referenzsignalgebers sowie des verwendeten Elementarsensors, beispielsweise eines Potentiometers, zu berücksichtigen sein. Auf der anderen Seite können auch bei der Montage der mechanischen Übertragungsmittel, d.h. insbesondere der verwendeten Zwischengetriebe, im Hinblick auf eine exakt definierte Referenzposition Toleranzen auftreten.

Eine exakte Abgleichung von elektrischem Meßsystem und mechanischer Einrichtung ist in fertigungstechnischer Hinsicht schwierig bzw. aufwendig.

Gemäß einer bevorzugten Weiterbildung der Erfindung sind die elektrische Meßvorrichtung und die mechanische Einrichtung durch Positionieren der Welle in einer Referenzposition abgleichbar, wobei ein dieser Referenzposition der Welle zugeordneter Referenzwert in einen Speicher der Positioniereinheit eingebbar ist und die Anzeige der mechanischen Einrichtung auf diesen Referenzwert einstellbar ist.

Im einfachsten Fall ist diese Referenzposition eine Endposition der Maschinenachse. Beispielsweise kann dieser Referenzposition der Referenz- bzw. der Positionswert Null oder 100 zugeordnet sein. Selbstverständlich kann als Referenzwert auch jeder andere beliebige Wert gewählt werden.

Wesentlich ist, daß sowohl das elektrische Meßsystem als auch die Anzeige der mechanischen Einrichtung auf diesen Referenzwert einstellbar sind. Wie bereits oben dargelegt, müssen mechanische Anzeige und elektrisches Meßsystem nicht einen identischen Wert anzeigen. Sofern die Werte für eine bestimmte Position der Welle voneinander abweichen, müssen sie jedoch in einem eindeutigen Zuordnungsverhältnis zueinander stehen. Bevorzugt ist jedoch der von dem elektrischen Meßsystem und der von der mechanischen Einrichtung angezeigte Positionswert identisch.

Die Einstellung der Positioniereinheit und damit deren elektrischen Meßvorrichtung auf den Referenzwert kann durch Eingabe des entsprechenden Positionswertes z.B. über eine elektrische Schnittstelle, z.B. einen CAN-Bus, erfolgen.

Wesentlich bei der erfindungsgemäßen Positioniereinheit ist, daß die mechanische Einrichtung exakt auf einen gewählten Referenzwert einstellbar ist.

Bei der erfindungsgemäßen Positioniereinheit ist es im Hinblick auf die in der Praxis geforderte Exaktheit erforderlich, daß das elektrische Meßsystem und die mechanische Einrichtung exakt auf eine Referenzposition abgleichbar bzw. abgeglichen sind. Dies kann im Sinne der Erfindung dadurch erfolgen, daß für das elektrische Meßsystem ein Referenzwert eingegeben wird und die Anzeige der mechanischen Einrichtung auf diesen Referenzwert nach Montage der Positioniereinheit eingestellt wird.

Bei dieser vorteilhaften Weiterbildung der Erfindung werden somit die Montagetoleranzen der verwendeten mechanischen und elektromechanischen Bauteile des elektrischen Meßsystems ausgeglichen, d.h. unwirksam gemacht. D.h. bei der Montage der erfindungsgemäßen Positioniereinheit wird die Anzeige der mechanischen Einrichtung auf den vorgegebenen Referenzwert genau eingestellt, und somit werden elektrisches Meßsystem und mechanische Einrichtung exakt aufeinander abgeglichen.

Durch diese Vorgehensweise entfällt eine aufwendige Abgleichung von elektrischem Meßsystem und mechanischer Einrichtung, da die bei der Herstellung der einzelnen Bauteile auftretenden Toleranzen durch die nachträgliche Einstellung der mechanischen Einrichtung auf exakt den Referenzwert ausgeglichen werden.

Bei einer weiteren bevorzugten Ausführungsform gibt die mechanische Einrichtung die erfaßte Position der Welle über ein Zählwerk, das über ein oder mehrere Übertragungsmittel, insbesondere ein oder mehrere Getriebe, mit der Stellvorrichtung bzw. bevorzugt der Welle gekoppelt ist, aus.

Das Zählwerk kann dabei eine mehrere, d.h. wenigstens zwei Zahlentrommeln umfassende Anzeigevorrichtung sein, die die Gesamtzahl der vollständigen Umdrehungen der Welle als auch die teilweise Umdrehung der Welle anzeigen. Jede Zahlentrommel ist dabei beispielsweise mit ganzen natürlichen Zahlen 0, 1, 2, 3, ... versehen. Die Zahlen können dabei auf der äußeren Walzenoberfläche in herkömmlicher Weise aufgebracht sein.

Im Hinblick auf die gewünschte kompakte Bauweise der Positioniereinheit kann es jedoch erwünscht sein, daß die mechanische Einrichtung so ausgebildet ist, daß diese nur wenig Raum in der erfindungsgemäßen Positioniereinheit einnimmt. Um diesem zusätzlichen Erfordernis Rechnung tragen zu können, können die Zahlentrommeln nebeneinander so angeordnet sein, daß die Walzenoberflächen der einzelnen Zahlentrommeln einander zugewandt sind, d.h. der Betrachter der mechanischen Anzeige blickt auf eine der Stirnseiten der Zahlentrommeln. Die die Walzenposition anzeigenden Ziffern sind dann auf einer Stirnseite der Walzentrommeln angeordnet. Die vorgenannte Bauweise ermöglicht eine flache Gestaltung der mechanischen Einrichtung zur Anzeige der Position der Welle. Bevorzugt umfaßt die mechanische Einrichtung zwei Zahlentromeln.

Im Hinblick auf die Abgleichungsmöglichkeit von elektrischem Meßsystem und mechanischer Einrichtung ist die mechanische Anzeige so ausgestaltet, daß beispielsweise die den Bereich innerhalb einer vollständigen Umdrehung der Welle anzeigende Zahlentrommel exakt auf den zugeordneten Referenzwert einstellbar ist.

Weiterhin ist bevorzugt, daß die mechanische Einrichtung die erfaßte Position der Welle über eine die Anzahl von vollständigen Umdrehungen der Welle anzeigende Skala und eine die Position der Welle innerhalb einer vollständigen Umdrehung der Welle anzeigende Skala ausgibt, wobei die Skalen über ein oder mehrere Übertragungsmittel, insbesondere ein oder mehrere Getriebe, mit der Stellvorrichtung bzw. bevorzugt mit der Welle gekoppelt sind.

Dabei ist insbesondere bevorzugt, daß die Skalen als Scheiben, bevorzugt als flache Scheiben, ausgebildet sind.

Die die Position der Welle anzeigenden Positionswerte können dabei entlang des Umfangs der Scheiben aufgetragen sein.

Bei dieser Weiterbildung der erfindungsgemäßen Positioniereinheit werden anstelle von Zahlentrommeln somit Scheiben zur Anzeige der Position der Welle verwendet.

In Abhängigkeit von der Anzahl der als Skalen verwendeten Scheiben und den Übersetzungen der die Scheiben antreibenden Übertragungsmittel, bevorzugt Getriebe, kann die Position der Welle sehr genau angezeigt werden. Bevorzugt werden zwei flache Scheiben als Skalen verwendet. Die Verwendung von insbesondere kreisförmigen Skalenscheiben ermöglicht eine sehr flache und kompakte Gestaltung der mechanischen Einrichtung zur Erfassung der Position der Welle. Die Scheiben können ohne weiteres auf der Innenseite eines die Positioniereinheit umgebenden Gehäuses angeordnet werden. Für die Ablesung der Position der Welle können dann Öffnungen, die gegebenenfalls mit einem transparenten Material wie Glas oder Kunststoff versehen sind, vorgesehen sein. Dabei kann das transparente Material nach Art eine optischen Linse ausgebildet sein, so daß die angezeigten Zahlenwerte optisch vergrößert werden. Somit ist eine leichtere und genauere Ablesung der Skalen möglich.

Weiterhin ist bevorzugt, daß eine Skala zur Anzeige der Anzahl von vollständigen Umdrehungen der Welle über ein oder mehrere Übertragungsmittel, insbesondere ein oder mehrere Getriebe, mit der Stellvorrichtung bzw. bevorzugt mit der Welle gekoppelt ist und daß eine Skala zur Anzeige der Position der Welle innerhalb einer vollständigen Umdrehung der Welle relativ zur Welle ortsfest und im wesentlichen konzentrisch zur Welle angebracht ist und ein Zeiger im wesentlichen rechtwinklig zur Längsachse der Welle an der Welle festlegbar angeordnet werden kann.

Diese Ausführungsform ermöglicht eine besonders kompakte Bauweise der erfindungsgemäßen Positioniereinheit, da die mechanische Einrichtung zur Erfassung und Anzeige der Position der Welle auf sehr wenige Bauelemente reduziert ist und insofern äußerst platzsparend ausgestaltet ist.

Bei dieser Ausführungsform wird eine Skala, die bevorzugt eine Scheibe ist und an deren äußeren Umfang die die Position der Welle anzeigenden Positionswerte, d.h. die Anzahl von vollständigen Umdrehungen der Welle, aufgetragen sind, beispielsweise ganze Zahlen in einem Bereich zwischen 0 bis 500, 0 bis 400, 0 bis 300, 0 bis 200 oder 0 bis 100, verwendet. Selbstverständlich können auch andere Zahlenbereiche auf der Skala aufgetragen werden.

Diese die vollständigen Umdrehungen der Welle anzeigende Skala ist über ein oder mehrere Übertragungsmittel mit der Stellvorrichtung bzw. bevorzugt mit der Welle mechanisch gekoppelt. Bevorzugt ist das Übertragungsmittel ein Getriebe, das eine geeignete Übersetzung aufweist, um die durch die Stellvorrichtung bewirkte Verstellung der Welle im Hinblick auf vollständige Umdrehungen der Welle entsprechend anzuzeigen.

Bei dieser Ausführungsform wird die teilweise Umdrehung der Welle dadurch angezeigt, daß an der Welle ein Zeiger angeordnet ist und auf eine im Hinblick auf die Welle ortsfest und im wesentlich konzentrisch zur Welle angeordnete Skala zeigt. D.h. der Zeiger dreht sich mit der Welle und zeigt auf der um die Welle herum angeordneten Skala den entsprechenden Positionswert der Welle innerhalb einer vollständigen Umdrehung an. Bei dieser Ausführungsform ist die Skala beispielsweise eine Lochscheibe. Durch die als Lochscheibe ausgebildete Skala wird dann die Welle hindurch geführt. Der Zeiger ist dabei so an der Welle angeordnet, daß er auf die entlang des Umfangs der Lochscheibe aufgebrachte Skala zeigt.

In Abhängigkeit von der Skalierung der im Hinblick auf die Welle ortsfest angeordneten Skala kann die Position innerhalb einer vollständigen Umdrehung der Welle sehr genau angezeigt werden. Bei Verwendung einer Skala mit 90 Teilstrichen wird die Position auf 4°, bei 180 Teilstrichen auf 2°, bei 360 Teilstrichen auf 1°, bei 100 Teilstrichen auf 3,6° und bei 1000 Teilstrichen auf 0,36° innerhalb einer vollständigen Umdrehung der Welle genau angezeigt. Selbstverständlich kann auch jede andere Skalierung mit einem größeren bzw. feineren Maßstab gewählt werden. Die Genauigkeit dieser Skala hängt letztendlich von der auf dem betreffendem Arbeitsgebiet erforderlichen Genauigkeit der Anzeige der Position der Welle ab.

Bei dieser Ausgestaltung der erfindungsgemäßen Positioniereinheit wird im günstigsten Fall nur ein Übertragungsmittel, d.h. insbesondere ein Getriebe benötigt, das die die vollständigen Umdrehungen der Welle anzeigende Skala mit der Stellvorrichtung bzw. bevorzugt mit der Welle mechanisch koppelt.

Äußerst vorteilhaft ist bei dieser erfindungsgemäßen Weiterbildung für die Anzeige der Position der Welle innerhalb einer vollständigen Umdrehung kein zusätzliches Übertragungsmittel wie beispielsweise ein Getriebe erforderlich. Dies erlaubt eine äußerst platzsparende und kompakte Ausgestaltung der erfindungsgemäßen Positioniereinheit.

Somit kann bei Verwendung dieser Ausführungsform eine äußerst kompakte Positioniereinheit zur automatischen Positionierung einer Welle bereitgestellt werden.

Bei dieser Ausführungsform ist weiterhin der Zeiger so ausgebildet, daß er an der Welle festlegbar ist.

Auf diese Art und Weise ist eine besonders einfache Abgleichung von elektrischem Meßsystem und mechanischer Einrichtung im Hinblick auf die Erfassung der Position der Welle möglich. Nach Fertigung der erfindungsgemäßen Positioniereinheit wird das elektrische Meßsystem auf den Referenzwert, beispielsweise Null, eingestellt und nachfolgend der Zeiger zur Anzeige der Position der Welle innerhalb einer vollständigen Umdrehung auf Null gesetzt.

Damit ist gewährleistet, daß das elektrische Meßsystem und die mechanische Einrichtung exakt auf den Referenzwert, vorliegend beispielsweise Null, eingestellt sind. Somit können Montagetoleranzen bei dem verwendeten elektrischen Meßsystem und auch die bei der Fertigung der Positioniereinheit, d.h. dem Einbau der mechanischen Einrichtung zur Erfassung der Position der Welle auftretenden Abweichungen vom Referenzwert ausgeglichen werden.

Diese Abweichungen liegen regelmäßig innerhalb einer vollständigen Umdrehung der Welle. Daher kann, wenn die die vollständigen Umdrehungen der Welle anzeigende Skala auf den Referenzwert eingestellt ist, vorliegend beispielsweise Null, die den Positionswert innerhalb einer vollständigen Umdrehung der Welle anzeigende Skala über die nachträgliche Festlegung des Zeigers auf den Referenzwert, d.h. vorliegend Null, exakt auf den in das elektrische Meßsystem eingegebenen Referenzwert abgeglichen werden.

Die die vollständige Umdrehungen der Welle anzeigende Skala kann beispielsweise als Zahnrad mit aufgebrachter Skalenscheibe ausgebildet sein. Dieses Zahnrad ist dann über mechanische Übertragungsmittel, d.h. beispielsweise über ein oder mehrere Getriebe, mit der Stellvorrichtung bzw. bevorzugt mit der Welle gekoppelt. Bei der Einstellung auf den Referenzwert, das heißt die Anzahl der vollständigen Umdrehungen der Welle, wird die Positioniereinheit mittels der Stellvorrichtung auf den in die Positioniereinheit eingegebenen Referenzwert positioniert. Danach wird die Skalenscheibe so auf dem Zahnrad angeordnet, daß der vorgegebene Referenzwert, das heißt die vorgegebene Anzahl der vollständigen Umdrehungen, an der Skalenscheibe genau angezeigt wird. Die Skalenscheibe kann dabei auf dem Zahnrad beispielsweise aufgeklebt oder mechanisch festgelegt sein.

Wie in der DE 197 03 525 A1, die hiermit durch Bezugnahme aufgenommen wird, beschrieben, weist die dort angegebene Positioniereinheit einen Grobdrehwinkelgeber, einen Referenzsignalgeber und einen Feindrehwinkelgeber auf. Insbesondere die Montage von Referenzdrehwinkelgeber und Grobdrehwinkelgeber ist mit unvermeidbaren mechanischen Toleranzen behaftet, die bei rein elektrischem Betrieb keinen Einfluß besitzen, die aber den Abgleich zwischen dem elektrischen Meßsystem und einer mechanischen Anzeige erschweren. Aus diesem Grund ist bevorzugt bei der Endmontage und Endprüfung der erfindungsgemäßen Positioniereinheit der die Position innerhalb einer vollständigen Umdrehung der Welle anzeigende Zeiger auf der Welle festlegbar ausgebildet, wobei mittels des Zeigers die Anzeige der mechanischen Einrichtung zunächst exakt auf den Referenzwert eingestellt und dann der Zeiger an der Welle festgelegt wird.

Die vorliegende erfindungsgemäße Positioniereinheit zur automatischen Positionierung einer Welle ermöglicht somit auf überraschend einfache Art und Weise eine exakte Abgleichung von elektrischem Meßsystem und mechanischer Anzeige zur Erfassung und Anzeige der Position der Welle. Weiterhin erlaubt diese Ausgestaltung der mechanischen Einrichtung neben dem vorstehend erwähnten präzisen Abgleich von elektrischem Meßsystem und mechanischer Einrichtung eine äußerst platzsparende Anordnung der mechanischen Einrichtung innerhalb der erfindungsgemäßen Positioniereinheit, da im günstigsten Fall nur ein zusätzliches Getriebe, das die die vollständige Umdrehungen der Welle ausgebende Anzeige mit der Stellvorrichtung bzw. bevorzugt der Welle koppelt, erforderlich ist.

Gemäß einer weiter bevorzugten Ausführungsform ist der Zeiger über an der Welle anbringbare Befestigungsmittel an der Welle festlegbar. Die Festlegung erfolgt bevorzugt formschlüssig.

Bevorzugt ist, daß das Befestigungsmittel ein Befestigungsring mit einem dem Außendurchmesser der Welle entsprechenden Innendurchmesser ist, wobei der Befestigungsring wenigstens einen in Richtung der Ringöffnung weisenden Vorsprung, bevorzugt wenigstens zwei in Richtung der Ringöffnung weisende Vorsprünge, der bzw. die in in der Welle vorgesehene Ausnehmungen eingreift bzw. eingreifen, aufweist. Bevorzugt ist der in die Ringöffnung weisende Vorsprung in im wesentlichen radialer Richtung angeordnet.

Der Befestigungsring ist somit auf die Welle aufschiebbar und weist wenigstens einen, bevorzugt wenigstens zwei Vorsprünge auf, die im wesentlichen radial in Richtung der Ringöffnung des Befestigungsrings weisen. Diese Vorsprünge greifen dann in Ausnehmungen ein, die in der Welle vorgesehen sind. Die Vorsprüngen können dabei jede beliebige geometrische Form aufweisen, d.h. diese können beispielsweise halbkreisförmig, eckig oder auch hinterschnitten ausgebildet sein. Entsprechend der geometrischen Form der Vorsprünge des Befestigungsrings muß die in der Welle vorgesehene Ausnehmung ausgebildet sein.

Bevorzugt sind bei Verwendung einer als Hohlwelle ausgebildeten Abtriebsachse die Ausnehmungen als durchgängige Nuten bzw. Schlitze ausgebildet, die beispielsweise um 90° entlang des Umfangs der Welle versetzt zueinander in axialer Richtung an der Welle angeordnet sind. Die Anordnung der Schlitze erlaubt nach einem Aufschieben der Positioniereinheit auf die Spindel einer Maschinenachse das formschlüssige Festlegen der Hohlwelle an der Maschinenachse.

Die Vorsprünge werden dann bei der Montage des Befestigungsrings in die Ausnehmungen der Welle eingeführt und der Befestigungsring somit auf die Welle aufgeschoben. Weiterhin kann ein Anschlag an der Welle vorgesehen sein, bis zu dem der Befestigungsring aufschiebbar ist. Schließlich können in den Ausnehmungen der Welle Einrastmittel vorgesehen sein, so daß die an dem Befestigungsring angebrachten Vorsprünge in den Ausnehmungen der Welle verrastbar sind. Der Befestigungsring kann somit auf einfache Art und Weise an der Welle festgelegt werden.

Selbstverständlich kann der Befestigungsring auch nur teilweise ausgebildet sein, d.h. beispielsweise als Dreiviertelkreis oder Halbkreis ausgebildet sein. Wesentlich ist, daß der Befestigungsring an der Welle festlegbar ist. An diesem Befestigungsring kann dann der Zeiger beispielsweise durch Verklebung, Verschweißung, Verlötung, Verschraubung, Vernietung oder durch Einrastung befestigt werden.

Gemäß einer weiter bevorzugten Ausführungsform ist der Befestigungsring ringscheibenartig ausgebildet und weist wenigstens eine Durchbrechung, bevorzugt wenigstens zwei Durchbrechungen, im Ringscheibenbereich auf.

Unter Ringscheibe wird vorliegend eine Scheibe mit einer zentralen Öffnung nach Art einer Unterlegscheibe verstanden. Im Ringscheibenbereich ist dann wenigstens eine Durchbrechung, bevorzugt sind wenigstens zwei Durchbrechungen, vorgesehen. Diese Durchbrechungen können beispielsweise kreisförmig oder eckig ausgebildet sein.

Bei dieser erfindungsgemäßen Weiterbildung kann dann zunächst ein ringscheibenartig ausgebildeter Zeiger und nachfolgend ein Befestigungsring auf die Welle aufgeschoben werden. Durch die in dem ringscheibenartig ausgebildeten Befestigungsring vorgesehenen Durchbrechungen kann dann der auf den Referenzwert eingestellte Zeiger beispielsweise durch Verkleben, Verschweißen, Verlöten, Verschrauben, Vernieten, Einrasten, etc. an dem an der Welle ortsfest angebrachten Befestigungsring festgelegt werden.

Äußerst vorteilhaft wird somit die auf den Referenzwert eingestellte Position des Zeigers relativ zur Welle fixiert. Bei einer Demontage und späteren erneuten Montage des Zeigers, der an dem Befestigungsring, der über seine Vorsprünge in die Ausnehmungen der Welle eingreift, festgelegt ist, geht der Abgleich der mechanischen Anzeige und der elektrischen Meßvorrichtung nicht verloren. Ein erneuter Abgleich ist somit nicht erforderlich.

Bevorzugt ist der Zeiger bei dieser Ausführungsform an einem Ring angebracht, wobei der Öffnungsdurchmesser des Rings dem Durchmesser der Welle entspricht, so daß der Zeiger auf die Welle aufgeschoben werden kann. Als Zeiger kann beispielsweise eine mit einem Vorsprung versehene Ringscheibe verwendet werden. Dieser Vorsprung dient dann als Zeiger.

Gemäß einer weiteren bevorzugten Ausführungsform ist der Zeiger ringscheibenartig ausgebildet und weist wenigstens eine Durchbrechung, bevorzugt wenigstens zwei Durchbrechungen, in der Ringscheibe auf.

Bei dieser Ausführungsform wird zunächst ein Befestigungsring auf die Welle aufgeschoben und nachfolgend ein wie vorstehend beschriebener Zeiger auf die Welle aufgeschoben. Durch die in dem ringscheibenartig ausgebildeten Zeiger vorgesehenen Durchbrechungen kann der Zeiger nach Einstellung des Zeigers auf den Referenzwert beispielsweise durch Verkleben, Verlöten, Verschweißen, Verschrauben, Vernieten, Einrasten, etc. mit dem an der Welle ortsfest festgelegten Befestigungsring verbunden werden.

Gemäß einer weiter bevorzugten Ausführungsform weist die Skala zur Anzeige der Position der Welle innerhalb einer vollständigen Umdrehung der Welle eine Skalierung mit einer Genauigkeit von wenigstens 3,6°, bevorzugt von wenigstens 0,36°, auf.

Die Feinheit der Skalierung wird im wesentlichen lediglich durch die optische Auflösung begrenzt. Die Genauigkeit bzw. Feinheit der Skala richtet sich nach der jeweiligen erforderlichen Be- bzw. Verarbeitungsgenauigkeit der Be-bzw. Verarbeitungsmaschine.

Bei einer gewünschten Vergrößerung des Meßbereichs, beispielsweise bei einer gewünschten Erfassung von mehreren Hundert oder Tausend Umdrehungen der Welle, muß die Skaleneinteilung der mechanischen Einrichtung so fein gewählt werden, daß eine exakte Ablesung umständlich bzw. gegebenenfalls nicht mehr möglich ist.

Eine weitere Begrenzung einer beliebigen Erhöhung der Feinheit der Skala zur Anzeige der vollständigen Umdrehungen einer Welle ist dadurch gegeben, daß das Übersetzungsverhältnis des zwischen der Welle und der Skala angeordneten Zwischengetriebes zu groß wird. Aufgrund eines entsprechend großen Übersetzungsverhältnisses wiese das Getriebe mehr Spiel auf, als dies dem Abstand zweier benachbarter Teilstriche auf der Skala entspräche. Damit käme es zu Ablesungsfehlern.

Aus Kostengründen scheidet die Verwendung von verspannten Zahnrädern, um das Spiel des Getriebes zu minimieren, in der Praxis aus.

Eine kostengünstige und äußerst praktikable Lösung ist es, mehrere Skalen, die jeweils über ein oder mehrere Zwischengetriebe miteinander verbunden sind, zu verwenden. Diese eine oder die mehreren Zwischengetriebe sind dann, wie vorstehend ausgeführt, mit der Stellvorrichtung oder bevorzugt mit der Welle mechanisch gekoppelt.

Dabei müssen Skaleneinteilung und das Übersetzungsverhältnis von jedem Skala-Getriebe-Paar aufeinander abgeglichen sein. Beispielsweise erfordert die Verwendung einer Skala mit einer Skalenteilung von 100 Teilstrichen eine Übersetzung von 100:1 durch ein oder mehrere Zwischengetriebe.

Durch eine Kombination von zwei, drei, vier, fünf, sechs, etc. Skalen sowie entsprechenden Zwischengetrieben können mehrere Tausend Umdrehungen einer Welle über die mechanische Einrichtung erfaßt und angezeigt werden. Beispielsweise ermöglicht die Verwendung von drei Skalen mit jeweils 100 Unterteilungen die Anzeige von bis zu 1.000.000 Umdrehungen Unter Verwendung dieses Anzeige-Prinzips kann jeder beliebiger Meßbereich von der mechanischen Einrichtung zur Anzeige der Position der Welle erfaßt und angezeigt werden. Als Anzeigeeinrichtung kann natürlich auch eine Zahlentrommel verwendet werden.

Selbstverständlich ist die Zahlendarstellung nicht auf das Dezimalsystem beschränkt, sondern es können auch andere Zahlenkodes wie der Binärkode oder der Hexdezimalkode verwendet werden.

Auch müssen nicht ein oder mehrere Zwischengetriebe für jede Skala vorgesehen sein. Die Skalen können an Wellen, die mit entsprechenden Übersetzungen angetrieben werden, eines einzigen Getriebes angeordnet sein. Selbstverständlich können die Skalen auch direkt auf die Stirnseiten von einzelnen Zahnrädern aufgebracht sein. Bei dieser letzten sehr bevorzugten Ausführungsform entfällt die Notwendigkeit von separat anzuordnenden Skalenscheiben. Dies ist insbesondere im Hinblick auf die gewünschte kleine und kompakte Ausgestaltung der erfindungsgemäßen Positioniereinheiten von Vorteil.

Die vorliegende Erfindung stellt somit auf überraschend einfache Art und Weise eine Positioniereinheit zur automatischen Positionierung einer Welle bereit, die sowohl ein elektrisches Meßsystem zur Erfassung und Regelung der Position der Welle als auch eine mechanische Einrichtung zur Erfassung und Anzeige der Position der Welle aufweist.

Die erfindungsgemäße Positioniereinheit erlaubt einen einfachen Austausch einer schadhaften Positioniereinheit gegen eine funktionsfähige Positioniereinheit, wobei eine aufwendige Justierung an der Be- bzw. Verarbeitungsmaschine nach dem Austausch der Positioniereinheit entfällt. Dies vereinfacht den Austausch und verringert die Ausfallzeit der Be- bzw. Verarbeitungsmaschine beträchtlich.

Nachfolgend wird die erfindungsgemäße Positioniereinheit unter Bezugnahme auf die Figuren beschrieben. Die Figuren stellen dabei lediglich veranschaulichende Ausführungsformen der vorliegenden Erfindung dar.
- Fig. 1: zeigt eine schematische Darstellung der erfindungsgemäßen Positioniereinheit zur Positionierung einer Welle;
- Fig. 2: zeigt eine Ausführungsform der erfindungsgemäßen Positioniereinheit von der Vorderseite;
- Fig. 3: zeigt die in Fig. 2 gezeigte Ausführungsform in Seitenansicht;
- Fig. 4: zeigt eine Stirnseite der Welle;
- Fig. 5: zeigt einen Zeiger, der bei der erfindungsgemäßen Positioniereinheit Verwendung finden kann;
- Fig. 6: zeigt einen Befestigungsring, der bei der erfindungsgemäßen Positioniereinheit Verwendung finden kann;
- Fig. 7: zeigt einen Teil einer Ausführungsform einer mechanischen Einrichtung mit mehreren Skalen zur Anzeige von vollständigen Umdrehungen einer Welle; und
- Fig. 8: zeigt einen Teil einer weiteren Ausführungsform einer mechanischen Einrichtung mit mehreren Skalen zur Anzeige von vollständigen Umdrehungen einer Welle.

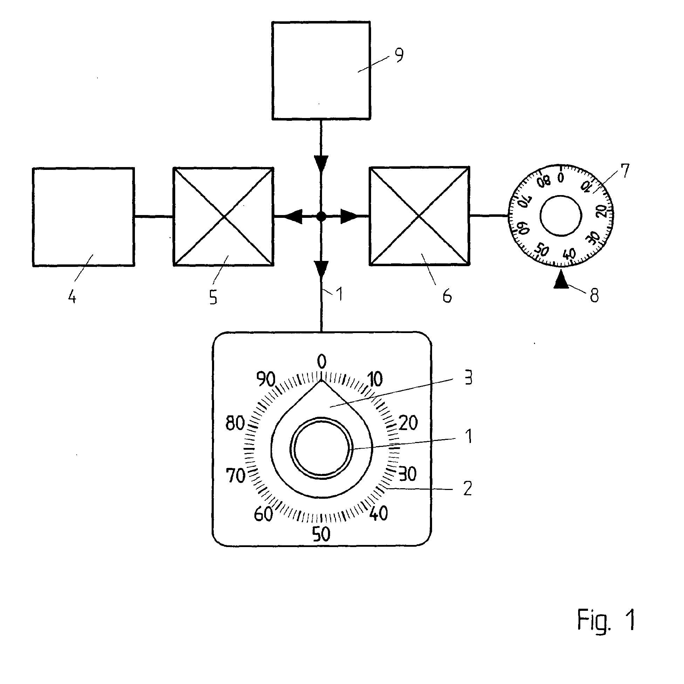

Fig. 1 zeigt eine schematische Darstellung der erfindungsgemäßen Positioniereinheit. Eine Welle (1) ist über eine Stellvorrichtung (9) angetrieben. Ein elektrisches Meßsystem (4) zur elektronischen Wegmessung ist über ein Zwischengetriebe (5) mit der Welle (1) gekoppelt. Eine Skala (7) zur Anzeige der vollständigen Umdrehungen der Welle (1) ist über ein Zwischengetriebe (6) mit der Welle (1) gekoppelt. Der feststehende Zeiger (8) zeigt an der Skala (7) die Zahl der vollständigen Umdrehungen der Welle (1) an. Der Zeiger (8) kann als eine in das nicht dargestellte Gehäuse der erfindungsgemäßen Positioniereinheit eingelassene Markierung ausgebildet sein. Die Position der Welle (1) innerhalb einer vollständigen Umdrehung wird über den Zeiger (3), der auf der Welle (1) angeordnet ist, auf der Skala (2), die konzentrisch zur Welle (1) angeordnet ist, angezeigt. Die Stellvorrichtung (9) kann ein über einen Elektromotor, insbesondere einen Schrittmotor, angetriebenes Stellgetriebe sein.

Fig. 1 zeigt, daß das elektrische Meßsystem (4) zur elektronischen Wegmessung und die mechanische Einrichtung zur Erfassung und Anzeige der Position der Welle über jeweils ein Zwischengetriebe (5) bzw. (6) mit der Welle (1) zugleich gekoppelt sind.

Bei der Fertigung der erfindungsgemäßen Positioniereinheit wird das elektrische Meßsystem (4) mittels der Stellvorrichtung (9) so eingestellt, daß es ein Signal erzeugt, das einem Referenzwert, beispielsweise dem Wert Null, entspricht und die Skala (7) auch auf den Referenzwert Null eingestellt. Vor dem Hintergrund von fertigungstechnisch bedingten Toleranzen sowohl bei dem Referenzgeber, bei dem beispielsweise als Elementarsensor verwendeten Potentiometer als auch bei den Zwischengetrieben (5) bzw. (6) kann es erforderlich sein, daß der Zeiger (3) an der Skala (2) nach Fertigung der Positioniereinheit auf den eingegebenen Referenzwert, beispielsweise Null, einzustellen ist. Somit ist eine exakte Abgleichung des elektrischen Meßsystems (4) und der aus Skala (7) und Skala (2) bestehenden Anzeige der mechanischen Einrichtung möglich. Nach Einstellung des Zeigers (3) auf den Referenzwert, beispielsweise Null, wird der Zeiger (3) an der Welle (1) festgelegt.

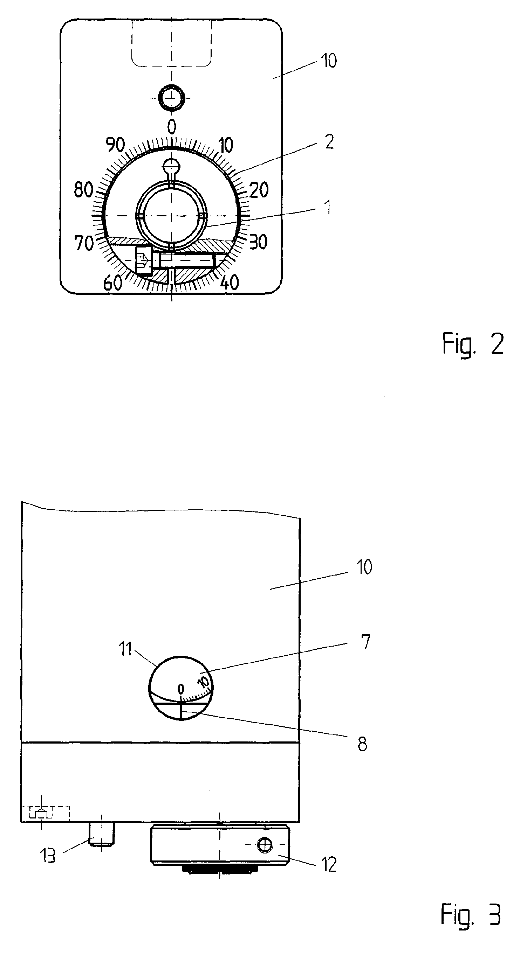

Fig. 2 zeigt eine Draufsicht auf die erfindungsgemäße Positioniereinheit. Die die Welle umgebende Skala (2) ist auf dem Gehäuse (10) aufgebracht. Die Skala (2) kann dabei direkt auf dem Gehäuse (10) beispielsweise durch Aufkleben oder Aufdrucken aufgebracht sein, oder separat vor dem Gehäuse (10) ortsfest zur Welle (1) angeordnet sein. Der Zeiger (3) ist in Fig. 2 nicht eingezeichnet.

Fig. 3 zeigt die in Fig. 2 dargestellte Ausführungsform um 90° gedreht in Seitenansicht. In der Seitenwand des Gehäuses (10) ist eine Öffnung (11) eingelassen, durch eine die vollständige Umdrehungen der Welle anzeigende Skala (7) abgelesen werden kann. Die Anzahl der vollständigen Umdrehungen der Welle (1) wird dann am feststehenden Zeiger (8) auf der Skala (7) angezeigt. Die Positioniereinheit wird beispielsweise über einen auf der Welle (1) angeordneten Klemmring (12) mit der anzutreibenden Spindel der Maschinenachse kraftschlüssig verbunden. Zusätzlich ist ein an dem Gehäuse, beispielsweise in Form eines Stifts, vorgesehener Vorsprung (13) angebracht, der ein Mitdrehen der Positioniereinheit bei der Drehung der Welle (1) verhindert. Anstelle des Klemmrings (12) können auch andere Befestigungsarten, wie z.B. eine Kupplung oder ein Flansch, verwendet werden, wenn beispielsweise anstelle einer Hohlwelle eine Vollwelle als Welle verwendet wird.

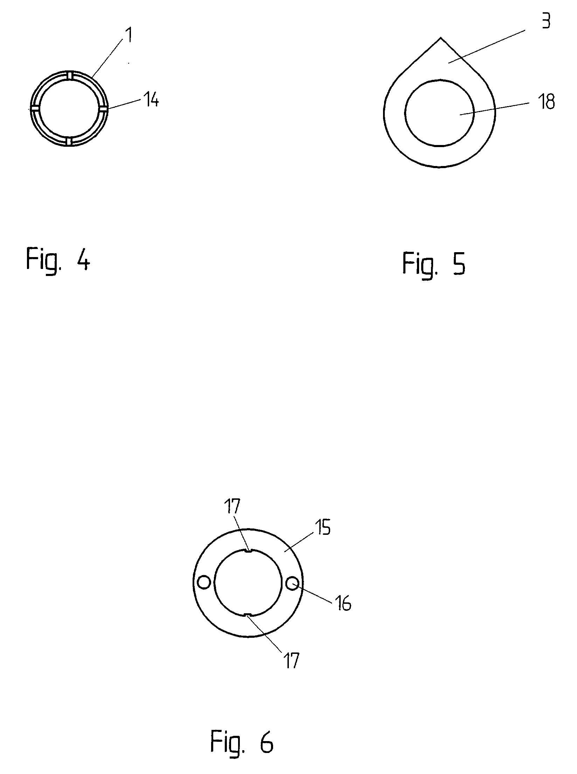

Fig. 4 zeigt eine Draufsicht auf eine Stirnseite der Welle (1). In die Welle sind Ausnehmungen (14) beispielsweise in Form von Schlitzen oder Nuten eingelassen. Diese Ausnehmungen können auch andere geometrische Formen aufweisen und beispielsweise hinterschnitten sein.

Fig. 5 zeigt einen ringscheibenartig ausgebildeten Zeiger (3) mit einer Ringöffnung (18), wobei der Innendurchmesser dem Außendurchmesser der Welle (1) entspricht. Somit kann der Zeiger (3) auf die Welle (1) aufgeschoben werden.

Fig. 6 zeigt einen ringscheibenartig ausgebildeten Befestigungsring (15) mit radial in die Ringöffnung weisenden Vorsprüngen (17), die in die Ausnehmungen (14) der Welle (1) eingreifen können. Die geometrische Form der Vorsprünge (17) entspricht der geometrischen Form der Ausnehmungen (14) in der Welle (1). Weiterhin sind in der Ringscheibe (15) Durchbrechungen (16) in Form kreisförmiger Öffnungen angeordnet.

Bei einem Abgleich von mechanischer Einrichtung zur Erfassung und Anzeige der Position der Welle (1) mit dem elektrischen Meßsystem (4) wird der Zeiger (3) auf die Welle (1) aufgeschoben und auf den entsprechenden Referenzwert, beispielsweise Null, eingestellt. Nachfolgend wird der Zeiger (3) an dem anschließend auf die Welle (1) aufgeschobenen Befestigungsring (15), wobei die Vorsprünge (17) des Befestigungrings (15) in die Ausnehmungen (14) in der Welle (1) eingreifen, festgelegt, indem der Zeiger durch die Öffnungen (16) in dem ringscheibenartigen Befestigungsring (15) beispielsweise durch Verkleben, Verlöten, Verschweißen, Verschrauben, Vernieten, etc. miteinander verbunden werden. Da der Befestigungsring (15) über die in die Aussparungen (14) der Welle (1) eingreifenden Vorsprünge (17) an der Welle (1) festgelegt ist, ist somit der Zeiger (3) über die durch die Öffnungen (16) bewirkte Verbindung relativ zur Welle (1) festgelegt.

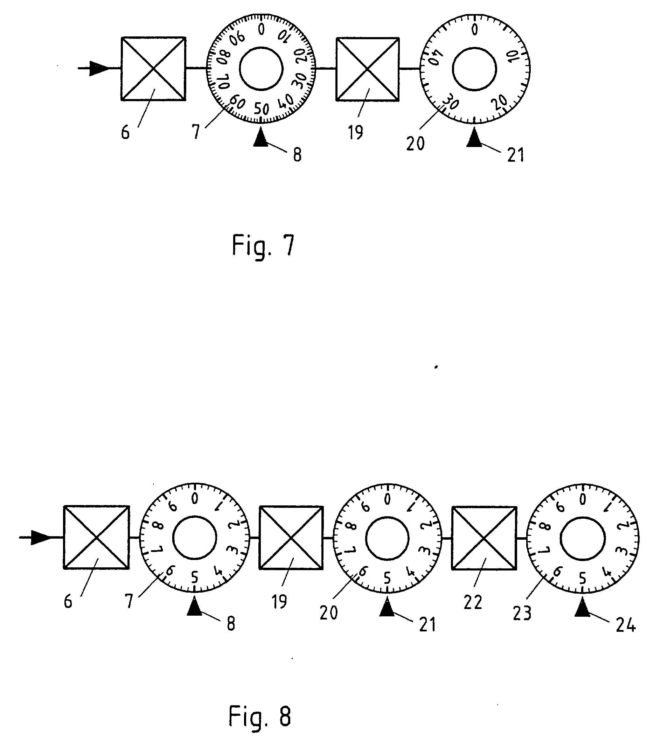

Fig. 7 zeigt eine Ausführungsform eines Teils der mechanischen Einrichtung zur Erfassung und Anzeige der Position der Welle (1). Über die Skalen (7) und (20) wird die Anzahl von vollständigen Umdrehungen der Welle (1) angezeigt. Die Skala (7) ist dabei über ein Zwischengetriebe (6) mit der Welle (1) gekoppelt. Das Zwischengetriebe (6) kann wahlweise aber auch mit der nicht gezeigten Stellvorrichtung (9) gekoppelt sein. Die Skala (20) kann über ein weiteres Zwischengetriebe (19) mit dem Zwischengetriebe (6) gekoppelt sein. Wahlweise können das Zwischengetriebe (6) und das Zwischengetriebe (20) auch als ein gemeinsames Getriebe ausgebildet sein, wobei die Skalen (7) und (20) auf Wellen, die mit den entsprechenden Übersetzungen angetrieben werden, angeordnet sind.

Die Zwischengetriebe (6) und (19) weisen dabei eine der Skalierung der Skalen (7) und (20) entsprechende Übersetzung auf. Die Skala (7) weist bei dieser Ausführungsform eine Teilung von 100 Teilstrichen auf. Folglich hat das Zwischengetriebe (6) eine Übersetzung von 100:1. Die Skala (20) weist bei dieser Ausführungsform eine Teilung von 50 Teilstrichen auf. Folglich hat das Zwischengetriebe (19) eine Übersetzung von 50:1. Mit dieser Ausführungsform lassen sich demzufolge 5.000 vollständige Umdrehungen einer Welle (1) erfassen und anzeigen.

An dem Zeiger (21) an der Skala (20) ist die Anzahl von jeweils 100 vollständigen Umdrehungen der Welle ablesbar. Die Anzahl von 1 bis 99 vollständigen Umdrehungen ist jeweils am Zeiger (8) an der Skala (7) ablesbar. Die Position innerhalb einer Umdrehung der Welle (1) wird durch den in Fig. 1 dargestellten Zeiger (3) an der Skala (2) angezeigt.

Fig. 8 zeigt eine weitere Ausführungsform eines Teils der mechanischen Einrichtung zur Erfassung und Anzeige der Position der Welle (1). Über die Skalen (7), (20) und (23) wird die Anzahl von vollständigen Umdrehungen der Welle (1) angezeigt. Die Skala (7) ist über ein Zwischengetriebe (6) mit der Welle (1) gekoppelt. Das Zwischengetriebe (6) kann wahlweise aber auch mit der nicht gezeigten Stellvorrichtung (9) gekoppelt sein. Mit dem Zwischengetriebe (6) sind in Reihe die Zwischengetriebe (19) und (22), die mit den Skalen (21) bzw. (23) gekoppelt sind, gekoppelt. Wahlweise können die Zwischengetriebe (6), (20) und (22) als ein gemeinsames Getriebe ausgebildet sein, wobei die Skalen (7), (20) und (23) auf Wellen, die mit den entsprechenden Übersetzungen angetrieben werden, angeordnet sind.

Die Zwischengetriebe (6), (19) und (22) weisen dabei eine der Skalierung der Skalen (7), (20) und (23) entsprechende Übersetzung auf. Die Skalen (7), (20) und (23) weisen bei dieser Ausführungsform jeweils eine Teilung von 10 Teilstrichen auf. Folglich haben die entsprechenden Zwischengetriebe (6), (19) und (22) eine Übersetzung von jeweils 10:1. Mit dieser Ausführungsform lassen sich demzufolge 1.000 vollständige Umdrehungen einer Welle (1) erfassen und anzeigen.

An dem Zeiger (24) an der Skala (23) ist die Anzahl von jeweils 100 vollständigen Umdrehungen der Welle ablesbar. Die Anzahl von 10 bis 90 vollständigen Umdrehungen ist jeweils am Zeiger (21) an der Skala (20) ablesbar. Die Anzahl von 1 bis 9 vollständigen Umdrehungen ist jeweils am Zeiger (8) an der Skala (7) ablesbar. Die Position innerhalb einer Umdrehung der Welle (1) wird durch den in Fig. 1 dargestellten Zeiger (3) an der Skala (2) angezeigt.

Selbstverständlich können die Skalen auch andere Unterteilungen aufweisen, wobei die Übersetzungen der Zwischengetriebe entsprechend an die jeweilige Skalierung angepaßt sein müssen. Weiterhin können auch mehr als drei Skalen, beispielsweise vier, fünf, sechs, etc. Skalen zur Anzeige der Anzahl von vollständigen Umdrehungen einer Welle (1) bei der mechanischen Einrichtung verwendet werden.

Die erfindungsgemäße Positioniereinheit erlaubt die Regelung und Erfassung der Position einer Maschinenachse mit einer Genauigkeit von einem Längenvorschub von bis zu 0,5 mm, bevorzugt bis zu 0,1 mm, weiter bevorzugt bis zu wenigstens 0,05 mm, äußerst bevorzugt bis zu wenigstens 0,01 mm.

Somit kann bei einem Austausch einer schadhaften Positioniereinheit gegen eine funktionsfähige, letztere mit hoher Genauigkeit auf die Position der austauschenden schadhaften Positioniereinheit eingestellt werden. Ein aufwendiges Fahren der Maschinenachsen in eine Referenzposition bei einem Austausch der Positioniereinheit ist nicht mehr erforderlich. Dies erleichtert den Austausch erheblich und verkürzt äußerst vorteilhaft die Ausfallzeit der Be- bzw. Verarbeitungsmaschine.

Die erfindungsgemäße Positioniereinheit kann äußerst vorteilhaft bei Holzbearbeitungsmaschinen bzw. Holzverarbeitungsmaschinen, Blechbearbeitungsmaschinen, Verpackungsmaschinen, Druckmaschinen, etc. verwendet werden.

### Bezugszeichenliste

- 1: Welle
- 2: Skala zur Anzeige der Position der Welle innerhalb einer vollständigen Umdrehung der Welle
- 3: Zeiger
- 4: elektrisches Meßsystem
- 5: Zwischengetriebe
- 6: Zwischengetriebe
- 7: Skala zur Anzeige von vollständigen Umdrehungen der Welle
- 8: Zeiger
- 9: Stellvorrichtung
- 10: Gehäuse
- 11: Sichtöffnung
- 12: Klemmring
- 13: Stift zur Sicherung der Positioniereinheit gegen Mitdrehen
- 14: Ausnehmung
- 15: ringscheibenartiger Befestigungsring
- 16: Öffnung in der Ringscheibe
- 17: Vorsprung
- 18: Ringöffnung des ringscheibenartigen Zeigers
- 19: Zwischengetriebe
- 20: Skala zur Anzeige von vollständigen Umdrehungen der Welle
- 21: Zeiger
- 22: Zwischengetriebe
- 23: Skala zur Anzeige von vollständigen Umdrehungen der Welle
- 24: Zeiger

## Patentansprüche

1. Positioniereinheit zur automatischen Positionierung einer Welle (1), die zur Einstellung der Position der Welle (1) eine Stellvorrichtung (9) und zur Erfassung und Regelung der Position der Welle ein elektrisches Meßsystem (4) aufweist,
**dadurch gekennzeichnet,**
**daß** die Positioniereinheit zusätzlich eine mechanische Einrichtung zur Erfassung und Anzeige der Position der Welle (1) aufweist und daß das elektrische Meßsystem (4) und die mechanische Einrichtung im Hinblick auf die Erfassung der Position der Welle (1) aufeinander abgleichbar sind.

2. Positioniereinheit gemäß Anspruch 1,
**dadurch gekennzeichnet,**
**daß** die mechanische Einrichtung zur Anzeige der Position in der Positioniereinheit integriert angeordnet ist.

3. Positioniereinheit nach Anspruch 1 oder 2,
**dadurch gekennzeichnet,**
**daß** das elektrische Meßsystem (4) und die mechanische Einrichtung zur Erfassung der Position der Welle (1) mit der Stellvorrichtung (9) über ein oder mehrere Übertragungsmittel (5, 6) mechanisch gekoppelt sind.

4. Positioniereinheit, nach Anspruch 1 oder 2,
**dadurch gekennzeichnet,**
**daß** das elektrische Meßsystem (4) und die mechanische Einrichtung zur Erfassung der Position der Welle (1) mit der Welle (1) über ein oder mehrere Übertragungsmittel (5, 6) mechanisch gekoppelt sind.

5. Positioniereinheit nach Anspruch 3 oder 4,
**dadurch gekennzeichnet,**
**daß** das Übertragungsmittel (5, 6) ein Getriebe ist.

6. Positioniereinheit nach wenigstens einem der vorhergehenden Ansprüche,
**dadurch gekennzeichnet,**
**daß** die elektrische Meßvorrichtung (4) und die mechanische Einrichtung durch Positionieren der Welle (1) in einer Referenzposition abgleichbar sind, wobei ein diese Referenzposition der Welle (1) kennzeichnender Referenzwert in die Positioniereinheit eingebbar ist und die Anzeige der mechanischen Einrichtung auf diesen Referenzwert einstellbar ist.

7. Positioniereinheit nach Anspruch 6,
**dadurch gekennzeichnet,**
**daß** die Referenzposition eine Endposition der Welle (1) ist.

8. Positioniereinheit nach wenigstens einem der vorhergehenden Ansprüche,
**dadurch gekennzeichnet,**
**daß** die mechanische Einrichtung die erfaßte Position der Welle (1) über ein Zählwerk, das über ein oder mehrere Übertragungsmittel, insbesondere ein oder mehrere Getriebe, mit der Stellvorrichtung (9) oder der Welle (1) gekoppelt ist, ausgibt.

9. Positioniereinheit nach wenigstens einem der Ansprüche 1 bis 7,
**dadurch gekennzeichnet,**
**daß** die mechanische Einrichtung die erfaßte Position der Welle (1) über eine die Anzahl von vollständigen Umdrehungen der Welle anzeigende Skala (7) und eine die Position der Welle (1) innerhalb einer vollständigen Umdrehung der Welle anzeigende Skala (2) ausgibt, wobei die Skalen (2, 7) über ein oder mehrere Übertragungsmittel (6), insbesondere ein oder mehrere Getriebe, mit der Stellvorrichtung (9) oder der Welle (1) gekoppelt sind.

10. Positioniereinheit nach Anspruch 9,
**dadurch gekennzeichnet,**
**daß** die Skalen (2, 7) als Scheiben ausgebildet sind.

11. Positioniereinheit nach Anspruch 9 oder 10,
**dadurch gekennzeichnet,**
**daß** eine Skala (7) zur Anzeige der Anzahl von vollständigen Umdrehungen der Welle (1) über ein oder mehrere Übertragungsmittel (6), insbesondere ein oder mehrere Getriebe, mit der Stellvorrichtung (9) oder der Welle (1) gekoppelt ist und daß eine Skala (2) zur Anzeige der Position der Welle (1) innerhalb einer vollständigen Umdrehung der Welle (1) relativ zur Welle (1) ortsfest und im wesentlichen konzentrisch zur Welle (1) angebracht ist und ein Zeiger (3) im wesentlichen rechtwinkelig zur Längsachse der Welle (1) an der Welle (1) festlegbar angeordnet werden kann.

12. Positioniereinheit nach Anspruch 11,
**dadurch gekennzeichnet,**
**daß** der Zeiger (3) über an der Welle (1) anbringbare Befestigungsmittel an der Welle (1) festlegbar ist.

13. Positioniereinheit nach Anspruch 12,
**dadurch gekennzeichnet,**
**daß** das Befestigungsmittel ein Befestigungsring (15) mit einem dem Außendurchmesser der Welle (1) entsprechenden Innendurchmesser ist, wobei der Befestigungsring (15) wenigstens einen im wesentlichen in radialer Richtung der Ringöffnung weisenden Vorsprung (17), bevorzugt wenigstens zwei im wesentlichen in radialer Richtung der Ringöffnung weisende Vorsprünge (17), der/die in in der Welle (1) vorgesehene Ausnehmungen (14) eingreift/en, aufweist.

14. Positioniereinheit nach Anspruch 13,
**dadurch gekennzeichnet,**
**daß** der Befestigungsring (15) ringscheibenartig ausgebildet ist und wenigstens eine Durchbrechung (16), bevorzugt wenigstens zwei Durchbrechungen (16), im Ringscheibenbereich aufweist.

15. Positioniereinheit nach Anspruch 13,
**dadurch gekennzeichnet,**
**daß** der Zeiger (3) ringscheibenartig ausgebildet ist und wenigstens eine Durchbrechung (16), bevorzugt wenigstens zwei Durchbrechungen (16), im Ringscheibenbereich aufweist.

16. Positioniereinheit nach Anspruch 14 oder 15,
**dadurch gekennzeichnet,**
**daß** der Zeiger (3) und der Befestigungsring (15) an den Durchbrechungen (16) miteinander verklebt, verlötet, verschweißt, verschraubt und/oder vernietet sind.

17. Positioniereinheit nach wenigstens einem der Ansprüche 9 bis 16,
**dadurch gekennzeichnet,**
**daß** die Skala (2) zur Anzeige der Position der Welle (1) innerhalb einer vollständigen Umdrehung der Welle (1) eine Skalierung mit einer Genauigkeit von wenigstens 3,6°, bevorzugt von wenigstens 0,36°, aufweist.

18. Positioniereinheit nach wenigstens einem der Ansprüche 9 bis 17,
**dadurch gekennzeichnet,**
**daß** die mechanische Einrichtung zur Anzeige von erfaßten vollständigen Umdrehungen der Welle zwei oder mehr Skalen (7, 20, 23) aufweist.

19. Positioniereinheit nach Anspruch 18,
**dadurch gekennzeichnet,**
**daß** die zwei oder mehr Skalen über ein oder mehrere Übertragungsmittel (19, 22), insbesondere Getriebe, mit der Stellvorrichtung (9) oder Welle (1) gekoppelt sind.
